# EUROPEAN PATENT SPECIFICATION

(11) **EP 3 795 434 B1**
(45) Date of publication and mention of the grant of the patent: **10.08.2022**
(21) Application number: 20195898.0
(22) Date of filing: 14.09.2020
(51) Int. Cl.: B60T 3/00, B60P 3/077

(54) **CHOCK FOR A TRUCK**
UNTERLEGKEIL FÜR EINEN LASTWAGEN
CALE POUR CAMION

(30) Priority: 23.09.2019 IT 201900017033
(43) Date of publication of application: 24.03.2021
(73) Proprietor: BICMA S.r.l., 47836 Mondaino (Rimini) (IT)
(72) Inventor: MAZZINI, Franco, 47836 Mondaino (Rimini) (IT)
(74) Representative: Casadei, Barbara

(56) References cited:
- DE-A1- 3 235 157
- GB-A- 2 521 529
- US-A1- 2017 369 260

## Description

This invention relates to a chuck for a truck.

The chock is a safety wedge used as a truck wheel stop, if the vehicle is stationary, travelling up or down.

Currently, the chocks are in the form of a single body, made of moulded plastic material, having a base, designed to form a surface for resting on the ground, a front wall, designed to come into contact with the wheel, a rear wall, inclined relative to the front wall, and a pair of side walls.

In order to comply with the road regulations, each truck must have a predetermined number of chocks.

These chocks are transported along the road sections followed by the truck using chock-carrying devices, which can be installed on the truck.

For example, a prior art chock-holder device comprises a plurality of panels, in particular a front panel and a pair of lateral panels, forming a pocket for inserting and housing the chock, and a handle, connected to the two lateral panels, designed to engage with the rear wall of the chock to guarantee the locking in the housing pocket.

To favour the coupling between the rear wall of the chock and the handle of the chock-carrying device, the provision in the rear wall of the chock one or more crests is known, protruding relative to the rear wall, each having a recess configured to define a seat for receiving a respective portion of handle.

GB 2 521 529 A and DE 32 35 157 A1 disclose wheel chock devices provided with coupling means on the rear side.

The invention is set out in the appended set of claims.

In this context, in order to improve the coupling between the handle of a chock-holder device and the rear wall of the chock and guarantee the stability during travel of the truck the need is felt of providing a chock for the truck consisting of a single body, shaped in the form of a wedge, made of moulded plastic material having a base configured to define a surface for resting on the ground, a front wall configured to support a wheel of the truck, a rear wall, inclined relative to the front wall, and a pair of side walls, in particular a first side wall and a second side wall.

The rear wall comprises coupling means configured to house at least part of a handle of a chock-carrying device in a housing.

The coupling means of the chock are configured to deform elastically, that is to say, to yield elastically, in such a way as to produce a relative movement with respect to the rear wall of the chock to allow the handle to engage in the housing and disengage from the housing.

Further features and advantages of this invention are more apparent in the detailed description below, with reference to a preferred, non-limiting, embodiment of chock for a truck as illustrated in the accompanying drawings, in which:

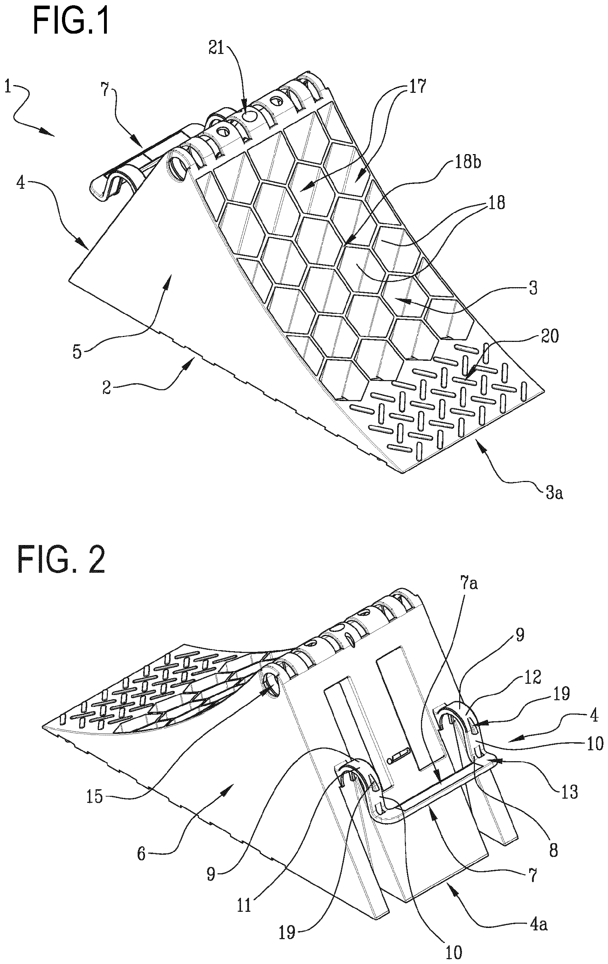

- Figure 1 is a schematic perspective view of the chock for a truck according to the invention;
- Figure 2 is a further schematic perspective view of the chock of Figure 1;
- Figure 3 is a schematic front view of the chock of Figure 1;
- Figure 4 is a schematic perspective bottom view of the chock of Figure 1;
- Figure 5 is a schematic perspective view of the chock of Figure 1 inserted in a chock-carrying device;
- Figure 6 is a scaled-up view of a detail of Figure 5.

With reference to the accompanying drawings, the numeral 1 denotes chock for a truck according to the invention.

The chock 1 according to the invention comprises a single wedge-shaped body made of moulded plastic material.

The chock 1 has a base 2, designed to form a surface for resting on the ground, a front wall 3, designed to make contact with a wheel of a truck, a rear wall 4, inclined relative to the front wall 3, and a pair of side walls 5, 6, in particular a first side wall 5 and a second side wall 6.

The front wall 3 is preferably a curved wall, in such a way as to follow the curved profile of the wheel designed to engage on the front wall 3.

The front wall 3 has a free end 3a designed to come into contact with the ground.

The rear wall 4 is a substantially flat wall.

The rear wall 4 has a free end 4a, designed to come into contact with the ground.

The free ends 3a, 4a, respectively of the front wall 3 and of the rear wall 4, extend along the entire width of the chock 1.

In particular, the front wall 3 and the rear wall 4 are inclined at an angle to each other in such a way as to define an acute angle.

At the top of the chock 1, that is, in an edge portion 21 contiguous between the front wall 3 and the rear wall 4, the chock 1 has a through hole 15 which extends from the first side wall 5 to the second side wall 6.

The through hole 15 extends along the entire width of the chock 1.

The through hole 15 is designed to house a support pipe, not illustrated, of the chock 1.

It should be noted that the front wall 3 increases in an increasing fashion from the free end 3a to the adjacent edge portion 21 between the front wall 3 and the rear wall 4.

Similarly, the front wall 3 extends in an increasing fashion from the free end 4a to the adjacent edge portion 21 between the front wall 3 and the rear wall 4.

With reference to the front wall 3, it has a first portion 20, adjacent to the relative free end 3a, having a relief pattern, preferably almond-shaped, in such a way as to favour the friction with the wheel of the truck.

The front wall 3 has a second portion 22, between the first portion 20 and the adjacent edge portion 21 between the front wall 3 and the rear wall 4, having a plurality of through channels 17 extending from the front wall 3 to the supporting base 2.

Each channel 17 is delimited by respective walls 18, adjacent to each other to define the perimeter of each channel 17.

According to this preferred embodiment, the walls 18 are positioned relative to each other in such a way as to give each channel 17 a hexagonal or semi-hexagonal shape.

It should be noted that, with reference to the front wall of the chock 1, each wall 18, which delimits respective channels 17, has a first end face 18b, defining the second portion 22 of the front wall 3.

In that sense, the second portion 22 has a reticular shape, defined by the above-mentioned end faces 18b.

It should be noted that, with reference to the base 2 of the chock 1, each wall 18, which delimits respective channels 17, has a second end face 18a.

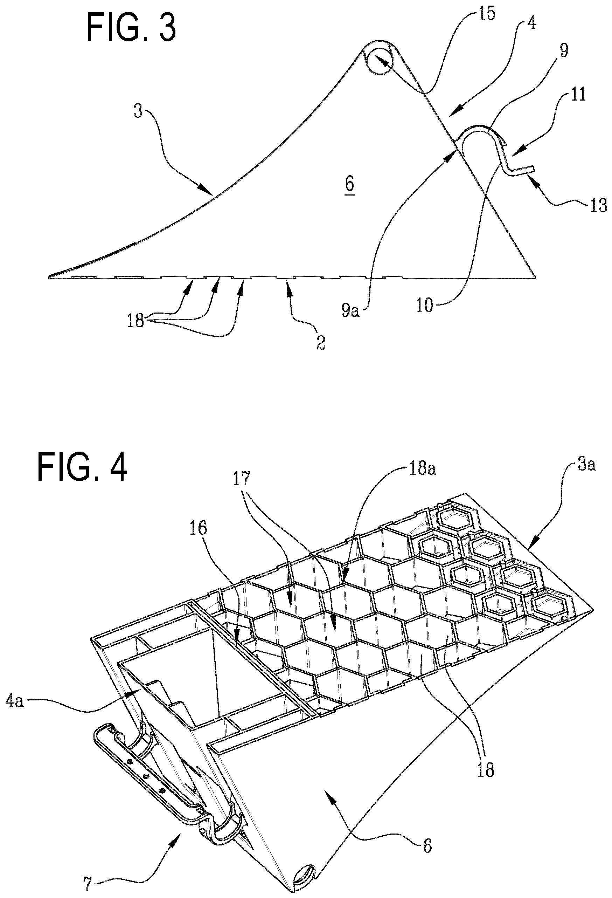

The second end faces 18a are positioned relative to each other at a variable height, in such a way as to define a saw tooth profile, shown in Figure 3, to favour the friction between the base 2 of the chock 1 and the ground.

In particular, the second end faces 18a of the walls 18 which extend along a direction parallel to the side walls 5, 6 of the chock 1 define recesses relative to the second end faces 18a of the walls 18 which are positioned inclined relative to the direction of extension of the side walls 5, 6.

As shown in Figure 4, the base 2 has a reticulated area 2a defined by the above-mentioned second end faces 18a.

The base 2 has at least one seat 16 configured to house a non-spark bar, not illustrated, which increases the friction between the chock 1 and the supporting ground.

The non-spark bar is generally a metal bar.

The seat 16 is positioned preferably at the centre line of the base 2 (Figure 4).

The rear wall 4 comprises coupling means 7 configured to house at least part of a handle 23 of a chock-carrying device 24.

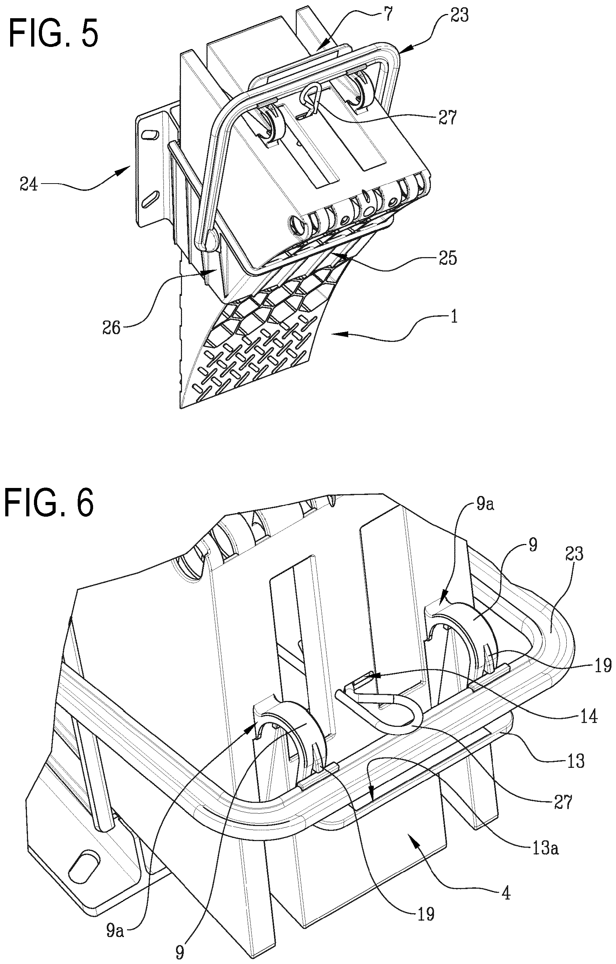

The chock-holder device 24, to which reference is made and not forming part of the invention, comprises a front panel 25 and a pair of side panels 26, forming a pocket for inserting and housing the chock 1, as illustrated in Figure 5.

The side panels 26 are designed to be fixed to the truck.

The handle 23, connected to the side panels 26, is designed to engage with the rear wall 4 of the chock 1 to guarantee the locking once it is inserted in the pocket.

According to the invention, the coupling means 7 of the chock 1 are configured to deform elastically, that is to say, to yield elastically, in such a way as to produce a relative movement with respect to the rear wall 4 of the chock 1.

More specifically, the coupling means 7 are configured to move towards and away from the rear wall 4 of the chock 1.

In particular, the movement of the coupling means 7 relative to the rear wall 4 is a relative bending of the coupling means 7 relative to the rear wall 4.

In other words, the coupling means 7 are in the form of a flexural spring.

The movement of the coupling means 7 occurs during the coupling and the uncoupling with the handle 23 of the chock-carrying device 24.

According to the embodiment illustrated, the above-mentioned coupling means 7 comprise a first element 11 and a second element 12 positioned on the rear wall 4 at a same height and spaced apart from each other, in a transversal direction of the rear wall 4.

The first element 11 and the second element 12 extend along a longitudinal direction of the rear wall 4.

With reference to the first element 11 and the second element 12 each has a respective first portion 9, connected to the rear wall 4, and a respective second portion 10, connected to the first portion 9.

In particular, referring to the first element 11 and to the second element 12, the first portion 9 is a curvilinear portion, preferably having a semicircular shape, equipped with an end 9a connected to the rear wall 4.

The first portion 9 has a concavity facing downwards, that is, towards the base 2 of the chock 1.

Referring to the first element 11 and to the second element 12, the second portion 10 is a rectilinear portion.

The second portion 10 extends along a direction incident with the rear wall 4, in particular defining with it an acute angle.

The coupling means 7 comprise a third element 13 for connecting the first element 11 and the second element 12.

The third element 13 connects together the second portion 10 of the first element 11 and the second portion 10 of the second element 12.

The third element 13 extends along a direction transversal to the rear wall 4.

The third element 13 extends along a direction transversal, in particular at right angles, to the second portion 10 of the first element 11 and of the second element 12.

In other words, with reference to Figure 3, the third element 13 and the second portion 10 of the first element 11 or of the second element 12 define an L-shaped lateral cross-section.

With reference to the relative movement between the coupling means 7 and the rear wall 4, the third element 13 and at least the second portion 10 of the first element 11 and the second element 12 move relative to the rear wall 4, towards and away from each other.

The first element 11 and the second element 12 have a respective stop element 19 configured to come into contact with a respective portion of the handle 23.

The coupling means 7 have a housing 8 designed to house at least a portion of the handle 23 of the chock-carrying device 24, defined by the third element 13 and by at least a part of the second portion 10 of the first element 11 and of the second element 12, between a respective stop element 19 and the third element 13.

The stop element 19 is in the form of a protruding tooth.

The housing 8 is formed by at least part of the outer surface 7a of the coupling means 7, meaning the surface facing towards the outside environment and not towards the rear wall 4.

As shown in Figure 6, the outer surface of the third element 13 designed to come into contact with a respective face of the handle 23 is a flat face 13a which extends mainly along the width of the chock 1.

The outer surface of the second portion 10 of the first element 11 and of the second element 12 between a respective stop element 19 and the third element 13 has a size suitable for receiving the transversal dimensions of the handle 23.

For a further safety, the rear wall 4 has a seat 14 configured to receive means 27, for example a pin, for locking the handle inserted in the relative housing 8.

The pin 27 prevents the escape of the handle 23 from the housing 8 once inserted.

Advantageously, the shape described of the first element 11, of the second element 12 and of the third element 13 allows a user to grip the third element 13 for moving the chock 1 manually.

## Claims

1. A chock for a truck consisting of a single wedge-shaped body made of moulded plastic material having a base (2) configured to form a surface for resting on the ground, a front wall (3) configured to support a wheel of the truck, a rear wall (4), inclined relative to the front wall (3), and a pair of side walls (5, 6), in particular a first side wall (5) and a second side wall (6) **characterized in that**
the rear wall (4) comprises coupling means (7) which have a housing (8) configured to house at least part of a handle (23) of a chock-carrying device (24);
the housing (8) is formed by at least part of the outer surface (7a) of the coupling means (7), meaning the surface facing towards the outside environment;
the coupling means (7) of the chock (1) are configured to deform elastically, that is to say, to yield elastically, in such a way as to produce a relative movement with respect to the rear wall (4) of the chock (1), towards and away from the rear wall (4), to allow the handle (23) to engage in the housing (8) and disengage from the housing (8).

2. The chock according to claim 1, **characterised in that** the above-mentioned coupling means (7) comprise a first element (11) and a second element (12) positioned on the rear wall (4) at a same height and spaced apart from each other, in a transversal direction of the rear wall (4).

3. The chock according to claim 2, **characterised in that** the above-mentioned coupling means (7) comprise a third element (13) for connecting the first element (11) and the second element (12).

4. The chock according to claim 3, **characterised in that** the first element (11) and the second element (12) each have a respective first portion (9), connected to the rear wall (4), and a respective second portion (10), connected to the first portion (9).

5. The chock according to claim 4, **characterised in that** the third element (13) connects together the second portion (10) of the first element (11) and the second portion (10) of the second element (12).

6. The chock according to claim 5, **characterised in that** the first portion (9) has a curvilinear configuration, preferably having a semicircular shape, equipped with one end (9a) connected to the rear wall (4); the first portion (9) has a concavity facing downwards, that is, towards the base (2) of the chock (1).

7. The chock according to any one of claims 4 to 6, **characterised in that**, when referring to the first element (11) and to the second element (12), the second portion (10) has a rectilinear configuration; the second portion (10) extends along a direction incident with the rear wall (4), in particular defining with it an acute angle.

8. The chock according to any one of claims 3 to 7, **characterised in that** the first element (11) and the second element (12) extend along a longitudinal direction of the rear wall (4) and the third element (13) extends along a direction transversal to the rear wall (4).

9. The chock according to any one of claims 4 to 8, **characterised in that** the first element (11) and the second element (12) have a respective stop element (19) configured to come into contact with a respective portion of the handle (23) of the chock-carrying device (24); the housing (8) is defined by the third element (13) and by at least a part of the second portion (10) of the first element (11) and of the second element (12), between a respective stop element (19) and the third element (13).

10. The chock according to claim 9, **characterised in that** the outer surface of the third element (13) designed to come into contact with a respective face of the handle (23) is a flat face (13a) which extends mainly along the width of the chock (1); the outer surface of the second portion (10) of the first element (11) and of the second element (12) between a respective stop element (19) and the third element (13) has a size suitable for receiving the transversal dimensions of the handle (23).

11. The chock according to any one of the preceding claims, **characterised in that** the rear wall (4) has a seat (14) configured to receive a locking means (27), for example a pin, configured to prevent the disengagement of the handle (23) from the housing (8).

## Patentansprüche

1. Unterlegkeil für einen Lastwagen, bestehend aus einem einzelnen keilförmigen Körper, der aus geformtem Kunststoffmaterial gefertigt ist, aufweisend eine Basis (2), die ausgelegt ist, um eine Oberfläche zum Ruhen auf dem Boden zu formen, eine Frontwand (3), die ausgelegt ist, um ein Rad des Lastwagens zu stützen, eine Rückwand (4), die relativ zur Frontwand (3) geneigt ist, und ein Paar Seitenwände (5, 6), insbesondere eine erste Seitenwand (5) und eine zweite Seitenwand (6), **dadurch gekennzeichnet, dass** die Rückwand (4) Kupplungsmittel (7) umfasst, die ein Gehäuse aufweisen (8), das ausgelegt ist, um mindestens einen Teil eines Handgriffs (23) der Unterlegkeilträgervorrichtung (24) unterzubringen, wobei das Gehäuse (8) durch mindestens einen Teil der äußeren Oberfläche (7a) der Kupplungsmittel (7) geformt ist, was bedeutet, dass die Oberfläche der außenseitigen Umgebung zugewandt ist,
wobei die Kupplungsmittel (7) des Unterlegkeils (1) ausgelegt sind, um sich elastisch zu verformen, d. h., elastisch nachzugeben, sodass eine relative Bewegung gegenüber der Rückwand (4) des Unterlegkeils (1) hinführend zur und wegführend von der Rückwand (4) erzeugt wird, sodass der Handgriff (23) in das Gehäuse (8) eingreifen und aus dem Gehäuse (8) gelöst werden kann.

2. Unterlegkeil nach Anspruch 1, **dadurch gekennzeichnet, dass** die oben genannten Kupplungsmittel (7) ein erstes Element (11) und ein zweites Element (12) umfassen, die an der Rückwand (4) in derselben Höhe positioniert und voneinander in einer Querrichtung der Rückwand (4) beabstandet sind.

3. Unterlegkeil nach Anspruch 2, **dadurch gekennzeichnet, dass** die oben genannten Kupplungsmittel (7) ein drittes Element (13) umfassen, um das erste Element (11) und das zweite Element (12) zu verbinden.

4. Unterlegkeil nach Anspruch 3, **dadurch gekennzeichnet, dass** das erste Element (11) und das zweite Element (12) jeweils einen jeweiligen ersten Abschnitt (9) aufweisen, der mit der Rückwand (4) verbunden ist, und einen jeweiligen zweiten Abschnitt (10), der mit dem ersten Abschnitt (9) verbunden ist.

5. Unterlegkeil nach Anspruch 4, **dadurch gekennzeichnet, dass** das dritte Element (13) den zweiten Abschnitt (10) des ersten Elements (11) und den zweiten Abschnitt (10) des zweiten Elements (12) miteinander verbindet.

6. Unterlegkeil nach Anspruch 5, **dadurch gekennzeichnet, dass** der erste Abschnitt (9) eine kurvenförmige Auslegung aufweist, die vorzugsweise eine halbkreisförmige Form aufweist, ausgestattet mit einem Ende (9a), das mit der Rückwand (4) verbunden ist, wobei der erste Abschnitt (9) eine Wölbung aufweist, die nach unten gerichtet ist, d. h. hinführend zur Basis (2) des Unterlegkeils (1).

7. Unterlegkeil nach einem der Ansprüche 4 bis 6, **dadurch gekennzeichnet, dass** der zweite Abschnitt (10) unter Bezugnahme auf das erste Element (11) und das zweite Element (12) eine geradlinige Auslegung aufweist, wobei sich der zweite Abschnitt (10) entlang einer Richtung erstreckt, die zur Rückwand (4) einfallend ist und insbesondere mit dieser einen spitzen Winkel definiert.

8. Unterlegkeil nach einem der Ansprüche 3 bis 7, **dadurch gekennzeichnet, dass** sich das erste Element (11) und das zweite Element (12) entlang einer Längsrichtung der Rückwand (4) erstrecken und sich das dritte Element (13) entlang einer Richtung erstrecken, die quer zur Rückwand (4) angeordnet ist.

9. Unterlegkeil nach einem der Ansprüche 4 bis 8, **dadurch gekennzeichnet, dass** das erste Element (11) und das zweite Element (12) ein jeweiliges Stoppelement (19) aufweisen, das ausgelegt ist, um mit einem jeweiligen Abschnitt des Handgriffs (23) der Unterlegkeilträgervorrichtung (24) in Kontakt zu kommen, wobei das Gehäuse (8) durch das dritte Element (13) und durch mindestens einen Teil des zweiten Abschnitts (10) des ersten Elements (11) und des zweiten Elements (12) zwischen einem jeweiligen Stoppelement (19) und dem dritten Element (13) definiert ist.

10. Unterlegkeil nach Anspruch 9, **dadurch gekennzeichnet, dass** die äußere Oberfläche des dritten Elements (13), die ausgestaltet ist, um mit einer jeweiligen Seitenfläche des Handgriffs (23) in Kontakt zu kommen, eine flache Seitenfläche (13a) ist, die sich hauptsächlich entlang der Breite des Unterlegkeils (1) erstreckt, wobei die äußere Oberfläche des zweiten Abschnitts (10) des ersten Elements (11) und des zweiten Elements (12) zwischen einem jeweiligen Stoppelement (19) und dem dritten Element (13) eine Größe aufweist, die für die Aufnahme der Querabmessungen des Handgriffs (23) geeignet ist.

11. Unterlegkeil nach einem der vorhergehenden Ansprüche, **dadurch gekennzeichnet, dass** die Rückwand (4) einen Sitz (14) aufweist, der ausgelegt ist, um Verriegelungsmittel (27), beispielsweise einen Zapfen, aufzunehmen, ausgelegt, um das Lösen des Handgriffs (23) aus dem Gehäuse (8) zu verhindern.

## Revendications

1. Cale pour camion constituée d'un corps unique en forme de coin en matière plastique moulée ayant une base (2) configurée pour former une surface d'appui sur le sol, une paroi avant (3) configurée pour supporter une roue du camion, une paroi arrière (4), inclinée par rapport à la paroi avant (3), et une paire de parois latérales (5, 6), en particulier une première paroi latérale (5) et une deuxième paroi latérale (6), **caractérisée en ce que** la paroi arrière (4) comprend des moyens d'accouplement (7) qui ont un logement (8) configuré pour loger au moins une partie d'une poignée (23) d'un dispositif de support de cale (24);
le logement (8) est formé par au moins une partie de la surface extérieure (7a) des moyens d'accouplement (7), c'est-à-dire la surface tournée vers l'environnement extérieur ;
les moyens d'accouplement (7) de la cale (1) sont configurés pour se déformer élastiquement, c'est-à-dire pour céder élastiquement, de manière à produire un mouvement relatif par rapport à la paroi arrière (4) de la cale (1), vers et à l'écart de la paroi arrière (4), pour permettre à la poignée (23) de s'engager dans le logement (8) et de se désengager du logement (8).

2. Cale selon la revendication 1, **caractérisée en ce que** les moyens d'accouplement (7) mentionnés ci-dessus comprennent un premier élément (11) et un second élément (12) positionnés sur la paroi arrière (4) à une même hauteur et espacés l'un de l'autre, dans une direction transversale de la paroi arrière (4).

3. Cale selon la revendication 2, **caractérisée en ce que** les moyens d'accouplement (7) mentionnés ci-dessus comprennent un troisième élément (13) pour relier le premier élément (11) et le deuxième élément (12).

4. Cale selon la revendication 3, **caractérisée en ce que** le premier élément (11) et le second élément (12) ont chacun une première portion respective (9), reliée à la paroi arrière (4), et une seconde portion respective (10), reliée à la première portion (9).

5. Cale selon la revendication 4, **caractérisée en ce que** le troisième élément (13) relie ensemble la deuxième portion (10) du premier élément (11) et la deuxième portion (10) du deuxième élément (12).

6. Cale selon la revendication 5, **caractérisée en ce que** la première portion (9) a une configuration curviligne, ayant de préférence une forme semi-circulaire, équipée d'une extrémité (9a) reliée à la paroi arrière (4) ; la première portion (9) a une concavité tournée vers le bas, c'est-à-dire vers la base (2) de la cale (1).

7. Cale selon l'une quelconque des revendications 4 à 6, **caractérisée en ce que**, en se référant au premier élément (11) et au deuxième élément (12), la deuxième portion (10) a une configuration rectiligne ; la deuxième portion (10) s'étend le long d'une direction incidente à la paroi arrière (4), en définissant notamment avec elle un angle aigu.

8. Cale selon l'une quelconque des revendications 3 à 7, **caractérisée en ce que** le premier élément (11) et le deuxième élément (12) s'étendent le long d'une direction longitudinale de la paroi arrière (4) et le troisième élément (13) s'étend le long d'une direction transversale à la paroi arrière (4).

9. Cale selon l'une quelconque des revendications 4 à 8, **caractérisée en ce que** le premier élément (11) et le deuxième élément (12) comportent un élément d'arrêt respectif (19) configuré pour venir en contact avec une portion respective de la poignée (23) du dispositif de support de cale (24) ; le logement (8) est défini par le troisième élément (13) et par au moins une partie de la deuxième portion (10) du premier élément (11) et du deuxième élément (12), entre un élément d'arrêt respectif (19) et le troisième élément (13).

10. Cale selon la revendication 9, **caractérisée en ce que** la surface extérieure du troisième élément (13) conçu pour entrer en contact avec une face respective de la poignée (23) est une face plate (13a) qui s'étend principalement le long de la largeur de la cale (1) ; la surface extérieure de la deuxième portion (10) du premier élément (11) et du deuxième élément (12) entre un élément d'arrêt respectif (19) et le troisième élément (13) a une taille appropriée pour recevoir les dimensions transversales de la poignée (23).

11. Cale selon l'une quelconque des revendications précédentes, **caractérisée en ce que** la paroi arrière (4) présente un siège (14) configuré pour recevoir des moyens de verrouillage (27), par exemple une goupille, configuré pour empêcher le désengagement de la poignée (23) du logement (8).
